# EUROPEAN PATENT APPLICATION

(11) **EP 1 340 689 A2**
(43) Date of publication of application: **03.09.2003**
(21) Application number: 03250937.4
(22) Date of filing: 15.02.2003
(51) Int. Cl.: B65D 63/08

(54) **Metal banding tie**

(30) Priority: 28.02.2002 GB 0204711; 19.03.2002 GB 0206518; 16.01.2003 GB 0300982
(71) Applicant: SPIRENT PLC, Crawley, West Sussex RH10 2QL (GB)
(72) Inventor: Blanks, Steven John, Winsford Cheshire CW7 2TU (GB); Dunkerley, Andrew William, Plymouth Devon PL7 2HN (GB); Gingell, Paul Andrew, Ivybridge Devon PL21 9RY (GB)
(74) Representative: Evans, Huw David Duncan

(57) **Abstract**

A metal banding tie arranged to be fastened with a tool comprises a head (30) and a elongate flexible strap (40). A passage (32) extends across the head (30) for receiving the strap (40) when the latter is formed into a loop about the object(s) to be tied and its outer end inserted into the passage (32) from a first end to a second end.

A pair of upstanding tabs (36) on opposite sides of the passage (32) converge, so that they can easily be folded in by the tool to secure the strap (40), because their outer ends are already angled in the direction in which they have to be folded by the tool.

## Description

This invention relates to a metal banding tie.

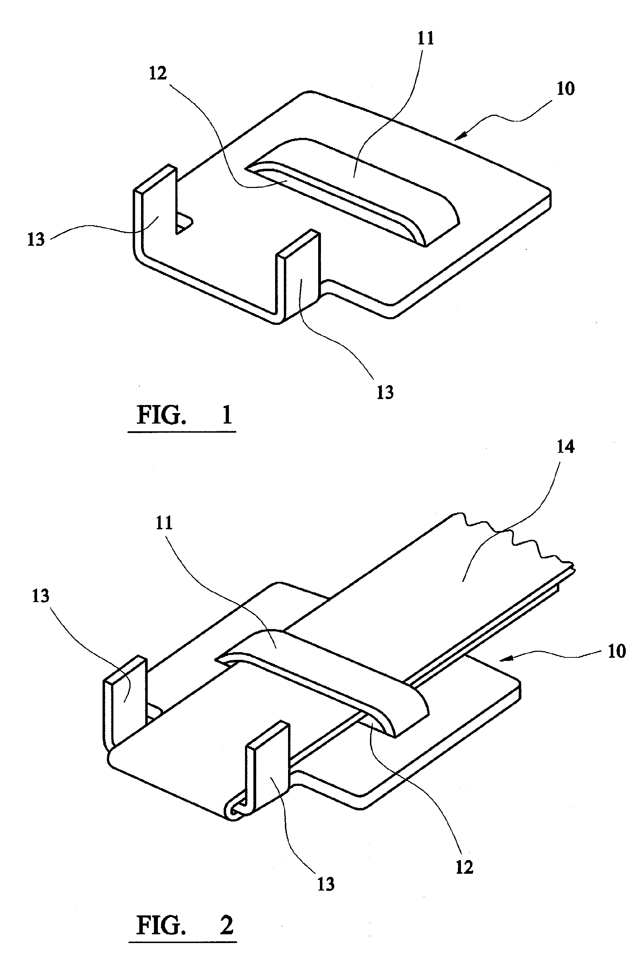

Metal banding ties are known for securing articles together securely. Referring to Figure 1 of the drawings, one such tie comprises a flat head or buckle 10, which is formed of a stamped sheet of metal. A bridge 11 is formed in the head to define a passage 12 which is directed across the head 10 in the plane thereof. A pair of spaced upstanding tabs 13 are formed on the outer end of the head.

A length of metal banding in the form of a flat strap 14 is cut from a roll and fastened at one end to the head 10, as shown in Figure 2 of the drawings. The strap 14 is fastened to the head 10 by feeding it across the head 10 from its inner end to its outer end, through the passageway 12. The strap is then folded downwardly through 180° around the outer end of the head 10 and fed back under the head 10, where it is passed through the opening formed under the bridge 11 to the top surface of the head 10. In this manner, the strap 14 is securely fastened at one end to the head.

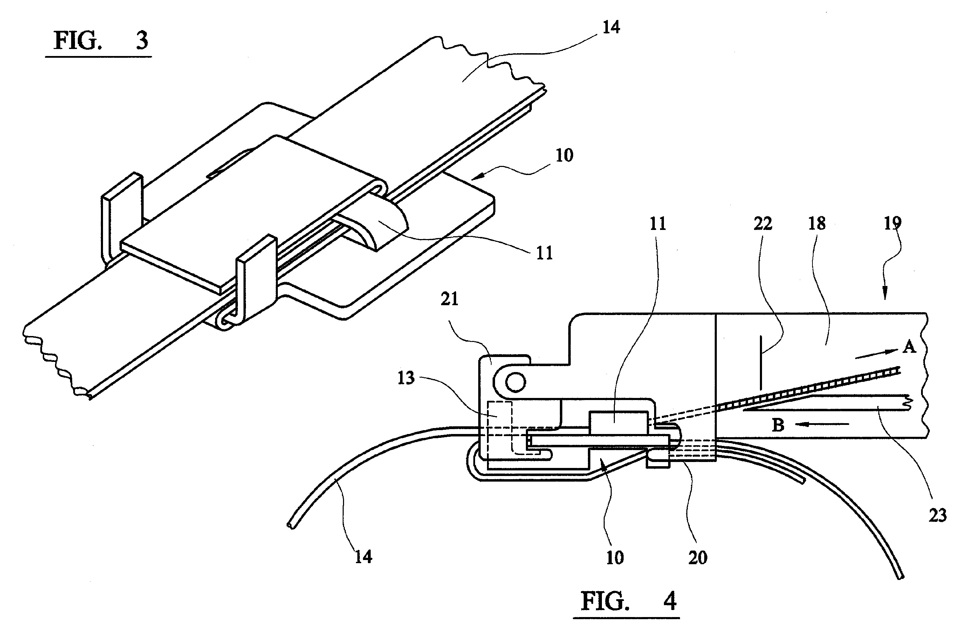

Referring to Figure 3 of the drawings, the tie can be used to fasten objects together by forming the strap 14 into a loop around the articles to be fastened, and inserting its free second end through the passage 12 in the head 10. The strap 14 is then tightened and secured by folding it back on itself through about 90° over the bridge 12, whereupon the strap tensioning force can be released and any excess length of strap 14 can be cut off. The strap 14 is then permanently secured by folding it completely back on itself before folding the tabs 13 inwardly to constrain the cut end, as shown.

It will be appreciated that the tie provides an extremely strong fastening around objects. However, such ties are difficult and time consuming to secure, particularly if any degree of tension is required in the strap.

Our co-pending UK Patent Application No.0203966.7 discloses a tool which tensions, cuts and secures metal banding ties in three simple steps. Initially, the tie is formed into a loop around the object(s) to be tied and the free end of the strap 14 is inserted through the passage 12 formed in the head of the tie.

Referring to Figure 4 of the drawings, the projecting length of strap is then fed into an upwardly-inclined passageway 18 formed in the tool 19 and the flat head 10 of the tie is constrained between a pair of jaws 20,21 of the tool.

The tie is then tensioned by pulling the projecting the projecting length of strap further through the head 10 along the upwardly-inclined passageway 18 in direction A. The tensioned strap is then temporarily clamped to the head 10, whilst a blade 22 in the tool cuts the strap in the passageway 18, at a point remote from the head 10 of the tie.

A folding member 23 of the tool is then advanced towards the head 10 of the tie in direction B, to abut the underside of the projecting length of strap and to fold the latter back over the head 10, so as to permanently secure the tie. The folding member 23 is then further driven to fold the upstanding tabs 13 on the head downwardly and towards each other onto the folded strap portion, to constrain the folded strap portion.

When the folding member 23 abuts the front edge of the tabs 13, it has to fold them towards each other in a direction which is perpendicular to the direction in which the folding member 23 is driven. It will be appreciated that is not only an extremely inefficient transfer of the folding force but also means that the tabs are not consistently folded correctly.

We have now devised a metal banding tie which alleviates the above-mentioned problems.

In accordance with this invention, as seen from a first aspect, there is provided a metal banding tie comprising a substantially flat head and a flexible strap extending outwardly from an inner end of the head, a raised bridge being provided on the head to define a through passage across the plane of the head, for receiving the strap when the strap is formed into a loop about the object(s) to be tied and its free end inserted into the passage from a first end to a second end, a pair of upstanding tabs being disposed on respective opposite sides of the passage adjacent the first end thereof, the outer ends of the tabs converging towards each other and being separated at their outer ends by a space which is equal to or greater than the width of the strap.

The tabs are much easier to fold towards each other using the above-mentioned tool, because their outer ends are already angled in the direction in which they have to be folded.

In one embodiment, the inner end of the tabs are separated from each other by a distance which is substantially greater than the width of the strap, in order to allow sufficient room for the tabs to converge and still leave a space between their outer ends which is equal to or greater than the width of the strap.

In an alternative embodiment, the inner end of the tabs are separated from each other by a distance which is substantially equal to the width of the strap, the lower ends of the tabs diverging outwardly, in order to allow sufficient room for the tabs to then converge and still leave a space between their outer ends which is equal to or greater than the width of the strap.

Preferably a plurality of bends are pre-formed in the tabs about distinct fold lines which extend transversely across the tabs in the direction of the passage. These fold lines assist in ensuring that the tabs fold correctly and also help to weaken the tabs slightly, thereby making them easier to fold.

Preferably, the tabs converge from respective fold lines.

Also in accordance with this invention, as seen from the first aspect, there is provided a head for attaching to an elongate flexible metal strap, the head being substantially flat and comprising a raised bridge which defines a through passage across the plane of the head, for receiving the strap when the strap is formed into a loop about the object(s) to be tied and its free end inserted into the passage from a first end to a second end, a pair of upstanding tabs being disposed on respective opposite sides of the passage adjacent the first end thereof, the outer ends of the tabs converging towards each other and being separated by a space which is equal to or greater than the width of the strap which the passage is arranged to receive.

Referring again to Figure 4 of the drawings, when the head 10 of the tie is engaged with the tool 19, the outer end edge of the head 10 is initially engaged with the outer jaw 21, which is pivoted to the body of the tool and the inner jaw 20. The body of the tool is then pivoted downwardly, about the point where the outer jaw 21 engages the head 10, to bring the inner jaw 20 into a position where it engages the inner end edge of the head 10.

One of the problems of this is that as the tool is pivoted into position, the looped strap 14 abuts the underside of the body of the tool at a point behind the inner jaw, where there is a double thickness of strap owing to the way in which the inner end of the strap is secured to the head. This double thickness is extremely inflexible and makes it difficult to manoeuvre the inner jaw 20 into a position where it engages the inner end edge of the head 10.

Thus, in accordance with this invention, as seen from a second aspect, there is provided a metal banding tie comprising a substantially flat head and a flexible strap attached at a first end thereof to the head and extending outwardly from an inner end of the head, a raised bridge being provided on the head to define a through passage across the top surface of the head, for receiving the strap when the strap is formed into a loop about the object(s) to be tied and its second end inserted into the passage from a first end to a second end, the first end of the strap extending through the passage from the second end to the first end and being folded around an outer end of the head to extend back on itself under the head and through an aperture formed under the bridge onto the upper surface of the head, the first end of the strap then extending downwardly around the inner end of the head.

Any tensioning force applied to the strap will tend to pull the first end of the strap back through the aperture. However, this is prevented owing to the first end of the strap being folded around the around the inner end of the head.

In this manner a secure connection is formed between the first end of the strap and the head without the need to continue the first end of the strap under the main strap portion and thereby avoiding the double thickness. Accordingly, as the tool is pivoted into position, the looped main strap abuts the underside of the body and, since the strap is only of single thickness at this point, it is more flexible and it is therefore easier to manoeuvre the inner jaw into a position where it engages the inner end of the head.

Also, in accordance with this invention as seen from the second aspect, there is provided a method of assembling a metal banding tie, comprising the steps of:
providing a substantially flat head having a raised bridge defining a through passage across the top surface of the head, for receiving the strap when the strap is formed into a loop about the object(s) to be tied and its second end inserted into the passage from a first end to a second end,
folding the first end of the strap so that it extends back on itself about a point inwardly of the first end and also substantially perpendicularly outwardly adjacent the end edge of the first end of the strap, in a direction away from the unfolded strap portion,
inserting the second end of the strap into the passage from the first end to the second end and pulling the strap further through the passage to bring the folded first end of the strap towards the head,
inserting the perpendicularly-folded end, at said first end of the strap, through an aperture formed under the bridge and engaging it over the inner end edge of the head, and
compressing the respective folded portions of the strap together about said point, to bring said point into a position adjacent the outer end edge of the head.

It is often necessary to apply metal banding ties such that the head thereof lies against a substantially flat surface. This can make it difficult to apply the tie using a tool having jaws which engage under the head, since the jaws abut the flat surface and thereby prevent the head of the tie from being pulled fully against the surface. Furthermore, the jaws can jam between the head and the surface, thereby making it difficult to disengage the tool from the head.

Thus, in accordance with this invention, as seen from a third aspect, there is provided a metal banding tie comprising a head having substantially flat body portion provided with a formation on its front surface defining a through passage for receiving a strap of the tie when the strap is formed into a loop about the object(s) to be tied and its free end inserted into the passage, the rear surface of the body of the head having an outwardly-extending formation arranged to abut the surface of an object about which the tie is applied.

In use, the outwardly-extending formation on the rear of the body of the head abuts a surface of an object about which the tie is applied and thereby acts as a stand-off which keeps the body of the tie away from the surface of the object and allows the jaws of the tool to be freely disengaged from the body of the head.

Also, since the formation on the rear of the body of the head abuts the object, the tie is tightly applied and will not loosen when the jaws are disengaged.

Preferably the formation on the rear of the body of the head is resiliently compressible against the body of the head.

Preferably a plurality of formations are provided on the rear of the body of the head.

Preferably a pair of formations are provided on opposite side edges of the body of the head on a line which extends transverse thereof, perpendicular to the longitudinal axis of the strap.

Preferably the head is formed as a one-piece from a sheet of metal, the formations comprising tabs which extend outwardly from opposite side edges of the body of the head.

Preferably, the tabs are folded inwardly towards each other.

A problem of tensioning ties using a tool is that the head of the tie needs to be located correctly in the jaws of the tool, otherwise the tool could jam or an unsatisfactory fastening could be formed. Also, there is a risk that persons could jam or damage the tool by using a conventional type of tie which is not designed for use in a tool.

Thus, in accordance with this invention as seen from a fourth aspect, there is provided a metal banding tie comprising a substantially flat head having front and rear edges arranged to engage with a fastening tool, at least one of said edges being provided with a formation for engaging with a complimentary formation on the tool.

The or each of the formations on the tie engages with the complimentary formation on the tool, thereby ensuring that the tie engages correctly with the tool and preventing the tie from displacing during tensioning. The formations also prevent incorrect ties from being used, particularly if at least one formation on the tie is a cut-out which receives a complimentary projection on the tool, since it will not be possible to fit a tie to the tool unless it has the appropriate cut-out for receiving the projection on the tool.

Preferably, the cut-out is a v-shaped notch formed in the edge of the tie.

Preferably two formations are formed on at least one of the edges of the tie.

Preferably the tie comprises and a flexible strap extending outwardly from an inner end of the head, a raised bridge being provided on the head to define a through passage across the plane of the head, for receiving the strap when the strap is formed into a loop about the object(s) to be tied and its free end inserted into the passage from a first end to a second end, a pair of upstanding tabs being disposed on respective opposite sides of the passage adjacent the first end thereof, the formations being formed on opposite sides of the passage on the outer end of the head.

An embodiment of this invention will now be described by way of example only and with reference to the accompanying drawings, in which:
Figures 1-3 are perspective views showing how a conventional metal banding tie is assembled and fastened;
Figure 4 is schematic side view of a banding tool for fastening metal banding ties;
Figure 5 is a side view of an embodiment of metal banding tie in accordance with this invention, when unfastened;
Figure 6 is a plan view of the metal banding tie of Figure 5, when fastened;
Figure 7 is a front view of the metal banding tie of Figure 5 when fastened;
Figure 8 is a perspective view from one side and above of the metal banding tie of Figure 5, when fastened;
Figure 9 is a perspective view from the other side and below of the metal banding tie of Figure 5, when fastened;
Figure 10 is a perspective view from one side and above of the head of an alternative embodiment of metal banding tie in accordance with this invention;
Figure 11 is a perspective view from the other side and below of the head of the tie of Figure 10;
Figure 12 is a perspective view of the head of a tie in accordance with the fourth aspect of this invention, with some parts shown cut away; and
Figure 13 is a perspective view of the head of an alternative embodiment of tie in accordance with the fourth aspect of this invention, with some parts shown cut away.

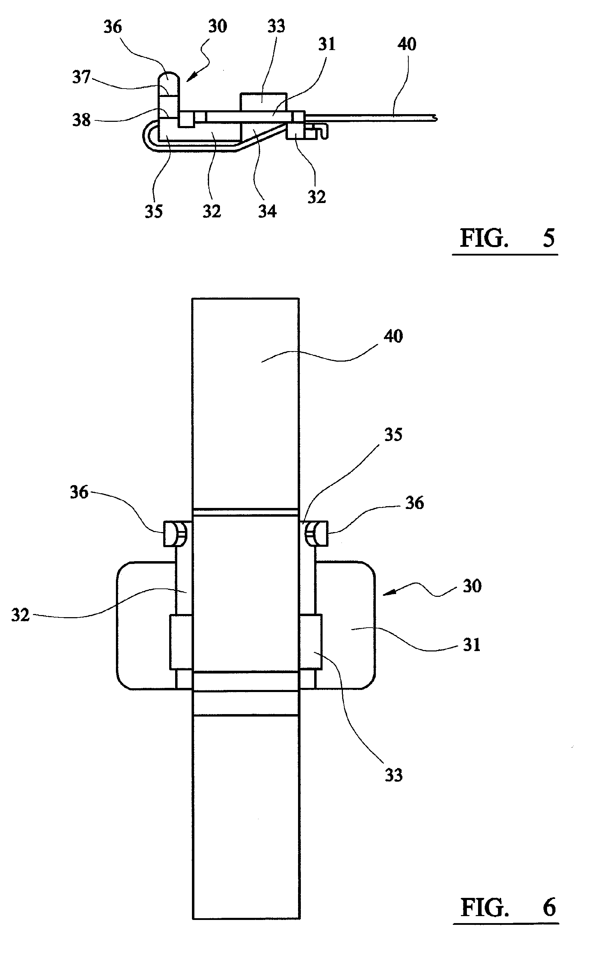

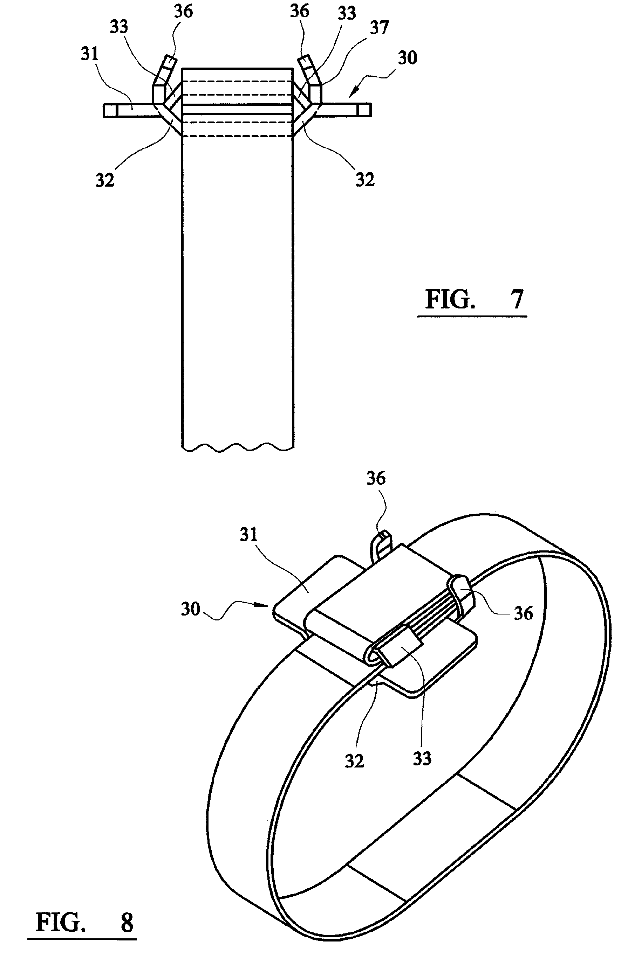

Referring to Figures 5 to 9 of the drawings, there is shown a metal banding tie intended for use with a banding tool of the type shown in Figure 4.

The tie comprises a substantially flat head 30 formed from a single sheet of metal and a separate elongate flat strap 40. The head comprises a rectangular body portion 31 having inner, outer and opposite side edges. A recessed passageway 32 extends across the body 31 between the inner and outer side edges thereof. The passageway 32 is slightly wider than the width of the strap 40.

A bridge 33 extends across the passageway 32 at a point intermediate its opposite ends. An aperture 34 is formed across the floor of the passageway 32, below the bridge 33.

The head 30 further comprises an extension portion 35 which extends outwardly from the floor of the passageway 32 on the outer side edge of the body portion 31 of the head 30. The extension portion 35 comprises a pair of upstanding tabs 36 on its respective opposite side edges.

The lower ends of the tabs 36 are aligned with respective opposite sides of the passageway 32 and are separated from each other by a distance which is slightly greater than the width of the passageway 32. The tabs 36 diverge outwardly to respective fold lines 38 which extend transverse the tabs in the direction of the passageway 32. The tabs 36 then extend parallel to each other in a direction perpendicular to the plane of the head 30. The upper ends of the tabs 36 then converge inwardly from respective fold lines 37 to their respective outermost points, which are separated from each other by a distance which is slightly greater than the width of the strap 40.

In order to permanently attach one end of the strap 40 to the head, the end of the strap is folded back on itself in a C-shaped formation. The folded end is then folded through 90° at a point several millimetres away from the end, in a direction away from the main portion of the strap 40.

The opposite end of the strap 40 is then passed between the tabs 36 and into the passageway 32 under the bridge 33. The strap 40 is then pulled through the head 30 until the folded end of the strap passes under the head 30, whereupon the folded end is manoeuvred through the aperture 36 into the passageway 32 on the top surface of the head. The portion at the end of the strap which is folded through 90° is then engaged over the edge of the inner edge of the body 31 of the head 30.

Finally, the C-shaped formation is flattened by compressing the respective strap portions together to bring the strap to the position of Figure 5.

In order to fasten the tie, the strap 40 is formed into a loop around the object(s) to be tied and its free end inserted between the tab 36 into the passageway 32. The length of strap projecting through the bridge 33 is then fed into an upwardly-inclined passageway formed in the fastening tool, shown in Figure 4. The outer edge of the body 31 of the head 30 is initially engaged with the outer jaw 21. The body of the tool is then pivoted downwardly, about the point where the outer jaw 21 engages the head 30, to bring the inner jaw 20 into a position where it engages the inner edge of the body 31 of the head 10.

The tie is then tensioned by pulling the projecting length of strap further through the head 30 along the upwardly-inclined passageway of the tool, as hereinbefore described. The tensioned strap is then temporarily clamped to the head 30, whilst the blade in the tool cuts the strap in the passageway of the tool, at a point remote from the head 30 of the tie.

The folding member of the tool is then advanced towards the head 30 of the tie, in a direction which extends parallel to, but above, the plane of the head 30, until it abuts the underside of the projecting length of strap and folds the latter through 180°back over the bridge 33 of the head 30, so as to permanently secure the tie.

The folding member is then further driven until it abuts the converging upper ends of the tabs 36 and folds the them inwardly towards each other. In order to assist this, the underside of the leading edge of the folding member is preferably provided with a formation or grooves having divergent inwardly-facing walls which are arranged to respectively abut the tabs and fold them inwardly as the outer end of the folding member passes over the tabs 36.

Although the transfer of forces is inefficient, the tabs 36 are relatively easy to fold towards each other using the above-mentioned tool, because their outer ends are already angled in the direction in which they have to be folded. The preformed fold lines 37,38 on the tabs 36 also weaken the tabs 36, so they are more inclined to fold.

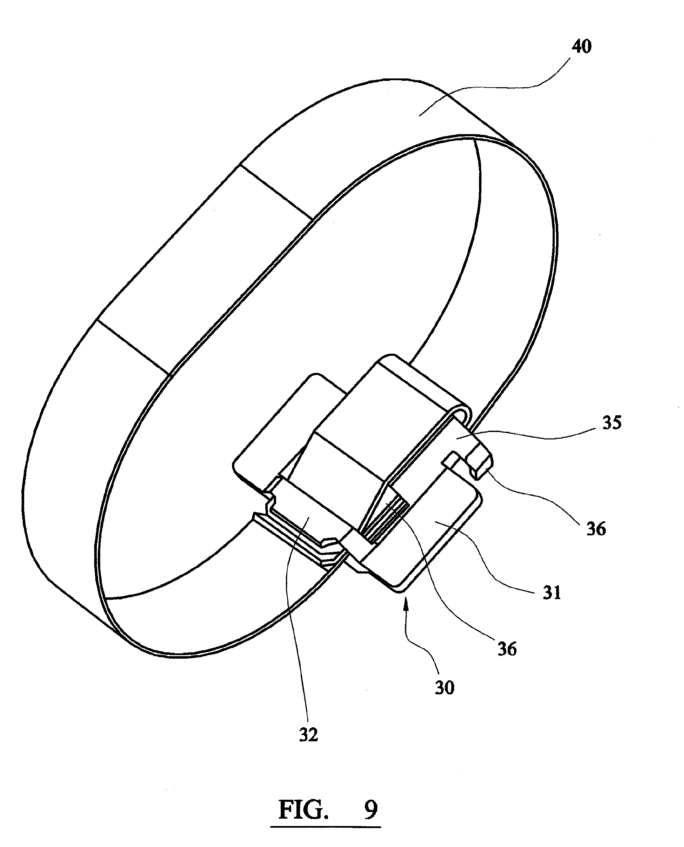

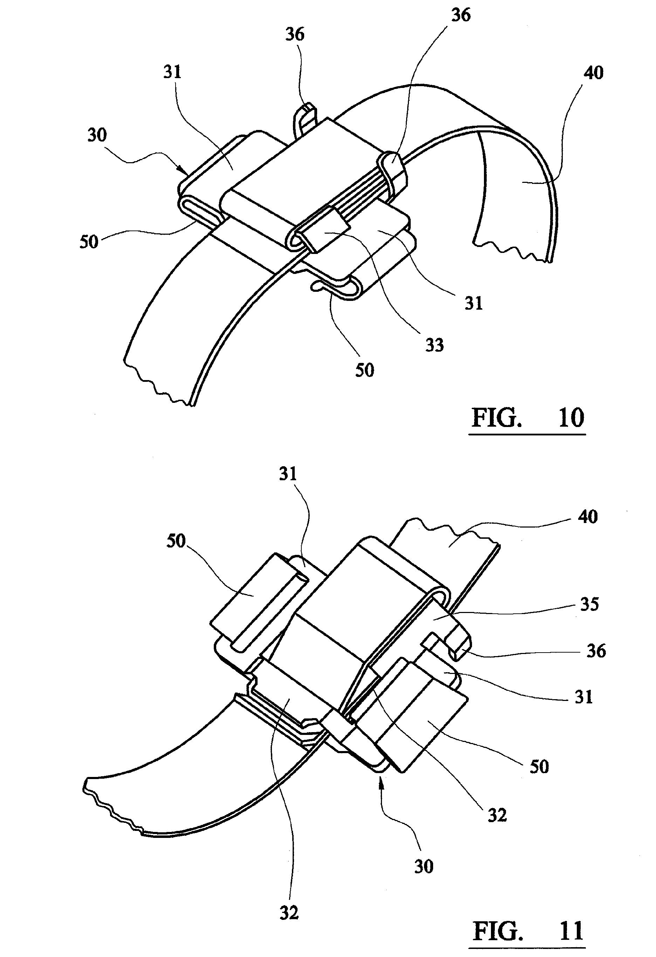

Referring to Figures 9 and 10 of the drawings, there is shown an alleviative embodiment of a metal banding tie and like parts are given the reference numerals.

A pair of tabs 50 are provided on opposite side edges of the body 31 of the head. The tabs 50 are bent inwardly towards each other on the underside of the head, the tabs 50 extending beyond the floor of the passage 32, so that they form the lowermost portion of the head.

In use when the head 30 is engaged by the jaws 20, 21 of the tool, the tabs 50 project beyond the underside of the jaws and thus abut the surface of an object about which the tie is applied.

In this manner the tie remains fully tensioned even when the tie is disengaged. During tightening, the tabs 50 are resiliently deformed slightly towards the underside of the body 31 of the head 30 and thus help to maintain the strap tension.

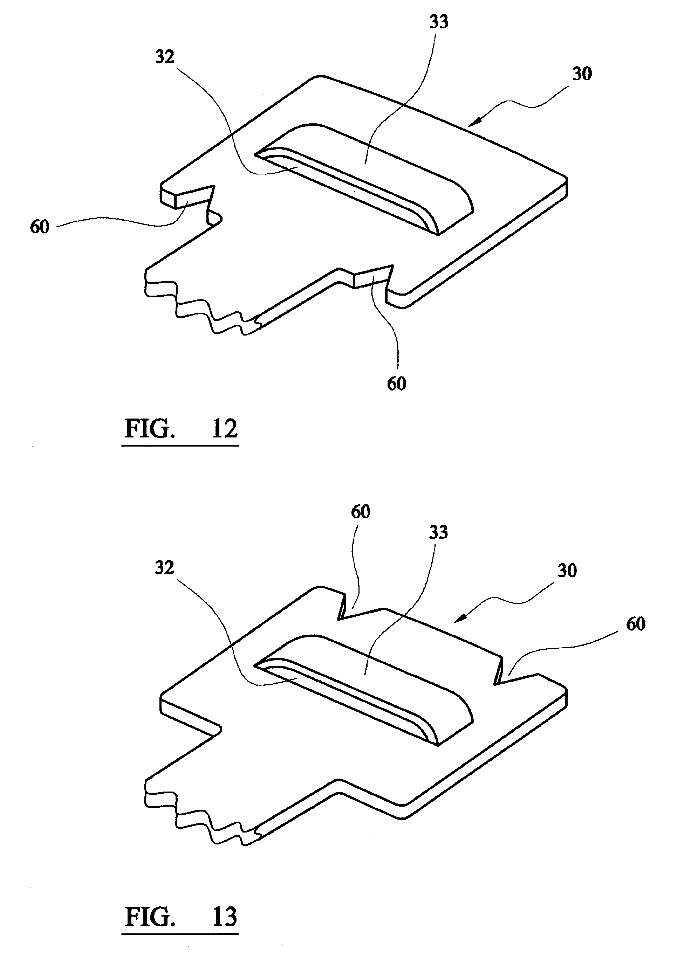

Referring to Figure 12 of the drawings, there is shown the head of a metal banding tie which is similar to the tie of Figures 5 to 9 and like parts are given like reference numerals. A pair of v-shaped notches 60 are formed in the edge of the head 30 at the outer end thereof on opposite sides of the passageway 32.

In use, the v-shaped notches 60 in the head 30 engage with complimentary v-shaped projections (not shown) on the jaws 20, 21 of the tool, thereby ensuring that the tie engages correctly with the tool and preventing the tie from displacing during tensioning. The formations also prevent incorrect ties from being used with the tool.

Referring to Figure 13 of the drawings, in an alternative embodiment, the v-shaped notches 60 can be formed in the edge of the head 30 at the inner end thereof on opposite sides of the passageway 32.

A tie in accordance with this invention can thus be reliably and consistently tensioned, cut and secured using a banding tool of the type disclosed in our co-pending UK Patent Application No.0203966.7.

## Claims

1. A metal banding tie comprising a substantially flat head 30 and a flexible strap 40 extending outwardly from an inner end of the head 30, a raised bridge being provided on the head to define a through passage 32 across the plane of the head, for receiving the strap when the strap is formed into a loop about the object(s) to be tied and its free end inserted into the passage from a first end to a second end, a pair of upstanding tabs being disposed on respective opposite sides of the passage adjacent the first end thereof, the outer ends of the tabs converging towards each other and being separated at their outer ends by a space which is equal to or greater than the width of the strap.

2. A metal banding tie as claimed in claim 1, in which the inner end of the tabs are separated from each other by a distance which is substantially greater than the width of the strap.

3. A metal banding tie as claimed in claim 1, in which the inner end of the tabs are separated from each other by a distance which is substantially equal to the width of the strap, the lower ends of the tabs diverging outwardly.

4. A metal banding tie as claimed in any preceding claim, in which a plurality of bends are pre-formed in the tabs about distinct fold lines which extend transversely across the tabs in the direction of the passage.

5. A metal banding tie as claimed in claim 4, in which the tabs converge from respective fold lines.

6. A metal banding tie as claimed in any preceding claim, in which the first end of the strap extends through the passage from the second end to the first end is folded around an outer end of the head to extend back on itself under the head and through an aperture formed under the bridge onto the upper surface of the head, the first end of the strap then extending downwardly around the inner end of the head.

7. A metal banding tie as claimed in any preceding claim, in which the rear surface of the head comprises an outwardly-extending formation arranged to abut the surface of an object about which the tie is applied.

8. A metal banding tie as claimed in any preceding claim, comprising front and rear edges arranged to engage with a fastening tool, at least one of said edges being provided with a formation for engaging with a complimentary formation on the tool.

9. A head for attaching to an elongate flexible metal strap, the head being substantially flat and comprising a raised bridge which defines a through passage across the plane of the head, for receiving the strap when the strap is formed into a loop about the object(s) to be tied and its free end inserted into the passage from a first end to a second end, a pair of upstanding tabs being disposed on respective opposite sides of the passage adjacent the first end thereof, the outer ends of the tabs converging towards each other and being separated by a space which is equal to or greater than the width of the strap which the passage is arranged to receive.

10. A metal banding tie comprising a substantially flat head and a flexible strap attached at a first end thereof to the head and extending outwardly from an inner end of the head, a raised bridge being provided on the head to define a through passage across the top surface of the head, for receiving the strap when the strap is formed into a loop about the object(s) to be tied and its second end inserted into the passage from a first end to a second end, the first end of the strap extending through the passage from the second end to the first end and being folded around an outer end of the head to extend back on itself under the head and through an aperture formed under the bridge onto the upper surface of the head, the first end of the strap then extending downwardly around the inner end of the head.

11. A metal banding tie as claimed in claim 10, in which the rear surface of the head comprises an outwardly-extending formation arranged to abut the surface of an object about which the tie is applied.

12. A metal banding tie as claimed in claims 10 or 11, comprising front and rear edges arranged to engage with a fastening tool, at least one of said edges being provided with a formation for engaging with a complimentary formation on the tool.

13. A method of assembling a metal banding tie, comprising the steps of:
providing a substantially flat head having a raised bridge defining a through passage across the top surface of the head, for receiving the strap when the strap is formed into a loop about the object(s) to be tied and its second end inserted into the passage from a first end to a second end,
folding the first end of the strap so that it extends back on itself about a point inwardly of the first end and also substantially perpendicularly outwardly adjacent the end edge of the first end of the strap, in a direction away from the unfolded strap portion,
inserting the second end of the strap into the passage from the first end to the second end and pulling the strap further through the passage to bring the folded first end of the strap towards the head,
inserting the perpendicularly-folded end, at said first end of the strap, through an aperture formed under the bridge and engaging it over the inner end edge of the head, and
compressing the respective folded portions of the strap together about said point, to bring said point into a position adjacent the outer end edge of the head.

14. A metal banding tie comprising a head having substantially flat body portion provided with a formation on its front surface defining a through passage for receiving a strap of the tie when the strap is formed into a loop about the object(s) to be tied and its free end inserted into the passage, the rear surface of the body of the head having an outwardly-extending formation arranged to abut the surface of an object about which the tie is applied.

15. A metal banding tie as claimed in claim 14, in which the formation on the rear of the body of the head is resiliently compressible against the body of the head.

16. A metal banding tie as claimed in claims 14 or 15, in which a plurality of formations are provided on the rear of the body of the head.

17. A metal banding tie as claimed in claim 16, in which a pair of formations are provided on opposite side edges of the body of the head on a line which extends transverse thereof, perpendicular to the longitudinal axis of the strap.

18. A metal banding tie as claimed in claims 16 or 17, in which the head is formed as a one-piece from a sheet of metal, the formations comprising tabs which extend outwardly from opposite side edges of the body of the head.

19. A metal banding tie as claimed in claim 18, in which the tabs are folded inwardly towards each other.

20. A metal banding tie as claimed in any of claims 14 to 19, comprising front and rear edges arranged to engage with a fastening tool, at least one of said edges being provided with a formation for engaging with a complimentary formation on the tool.

21. A metal banding tie comprising a substantially flat head having front and rear edges arranged to engage with a fastening tool, at least one of said edges being provided with a formation for engaging with a complimentary formation on the tool.

22. A metal banding tie as claimed in claim 21, in which at least one formation on the tie is a cut-out which receives a complimentary projection on the tool.

23. A metal banding tie as claimed in claim 22, in which the cut-out is a v-shaped notch formed in the edge of the tie.

24. A metal banding tie as claimed in any of claims 21 to 23, in which two formations are formed on at least one of the edges of the tie.
